# EUROPEAN PATENT SPECIFICATION

(11) **EP 0 832 014 B1**
(45) Date of publication and mention of the grant of the patent: **29.09.1999**
(21) Application number: 96920934.5
(22) Date of filing: 14.06.1996
(51) Int. Cl.: B60R 22/10, B60N 2/28

(54) **SAFETY BELT RESTRAINT DEVICE**
SICHERHEITSGURT-RÜCKHALTEVORRICHTUNG
DISPOSITIF DE RETENUE POUR CEINTURE DE SECURITE

(30) Priority: 16.06.1995 GB 9512251
(43) Date of publication of application: 01.04.1998
(73) Proprietor: METRO PRODUCTS (ACCESSORIES & LEISURE) LIMITED, Crawley, West Sussex RH10 2UY (GB)
(72) Inventor: SMITH, Anthony, Malcolm, Oxted, Surrey RH8 9PF (GB); FIELD, David, William, Surrey RH1 5NX (GB)
(74) Representative: Barradell-Smith, Ann
(86) International application number: GB9601440
(87) International publication number: WO9700184

(56) References cited:
- EP-A- 0 066 372
- EP-A- 0 094 318
- WO-A-92/14627
- PATENT ABSTRACTS OF JAPAN vol. 013, no. 013 (M-783), 12 January 1989 & JP,A,63 222956 (IKEDA BUSSAN CO LTD), 16 September 1988,

## Description

### The present invention relates to a restraint device for use with a safety belt system in a vehicle for adapting the orientation of the safety belt to suit a child.

Safety belt systems for vehicles are well known and commonly comprise a belt arrangement including a lap belt and a shoulder belt designed to cross the lap and the chest of a person to engage a clasp and provide a 3-point restraint. Such systems are generally designed to be employed by an adult and suffer from various disadvantages when applied to a child.

One key problem, in the case of a child, is the danger of the lap belt riding up the body of the child and impacting the vulnerable abdominal area under emergency braking or accident conditions with the consequent possibility of causing unnecessary harm.

Another problem is that the shoulder belt of the safety belt, being designed for a adult, tends to cross the upper torso of the child in the region of the neck rather than across the chest, which again is dangerous under conditions of emergency braking or accident.

In addition, an active wriggling child may generate slack in the safety belt system and thereby reduce its effectiveness.

Various proposals have been made for modifying existing safety belt systems for use by a child and one such proposal involves raising the body of the child by a substantial amount by means of a booster seat. This has the advantage of locating the safety belt better in relation to the body of the child but has the drawback that the head of the child is then often raised above the back of the vehicle seat and is thus unsupported in emergency and unprotected against whiplash.

Another proposal described in International Published Patent Application number WO92/16394 teaches a restraint device in the form of an open ended tubular guide through which both the shoulder and lap belts of the safety belt system are threaded prior to closure of the safety belt by means of the usual buckle and clasp arrangement. Such a guide has the advantage particularly of re-orienting the shoulder belt of the safety belt system to engage firmly across the chest of the child.

However, new European safety regulations are currently under consideration and new standards are likely to be introduced within the foreseeable future requiring a higher degree of safety for children, particularly up to 36 kg in weight, when travelling in automotive vehicles. One particular area of concern is the protection of the abdominal region of a child and the orientation of the lap belt of a safety belt system to ensure optimum safety even under adverse driving conditions.

European Published Patent Application No. 0 094 318 (corresponding to the preamble of claim 1) discloses a restraint device for use with a safety belt system in a vehicle for adapting the orientation of the safety belt to suit a child, in which the device comprises a raised seat engageable by the body of the child, and locating shoulders at the sides of the seat for engaging the lap belt to hold the same in use down against the pelvic region or thighs of the child.

Japanese Published Patent Application No. 63222956 discloses a safety belt restraint device for use by pregnant women. The device comprises a bar having curved sections for placing under the women's thighs and a hook projecting forwardly from the rear of the bar for engaging the lap belt to hold it down against the woman's thighs.

It is an object of the invention to provide a new restraint device for locating the lap belt of an existing safety belt system across the pelvic region or the thighs of a child in use.

A further object of the present invention is to provide a restraint device designed to prevent the lap belt of a safety belt system from becoming slack or riding up the body of a child in use.

Another object of the present invention, at least in its preferred form, is to provide such a restraint device which does not raise the body of a child significantly above the vehicle seat so that the head of the child remains protected at the rear by the back of the seat in use.

Still another object of the present invention, at least in its preferred form, is to provide a restraint device for additionally orienting the shoulder belt of a safety belt system across the chest and away from the neck of a child in use.

According to the invention, a restraint device for use with a safety belt system in a vehicle for adapting the orientation of the safety belt to suit a child, comprising a child's seat engageable by the body of the child, and locating means arranged so as to engage the lap belt of the safety belt system to hold the lap belt firmly down against the pelvic region or the thighs of the child in use, is characterised in that the seat has a central forwardly projecting hook member extending from the front of the seat and providing the locating means.

The advantage of this arrangement is that the lap belt is located firmly away from the stomach of the child and yet at the same time can simply be released forwardly following release of the buckle and clasp of the safety belt systems when the child is to be removed. The seat may be made from any material providing a rigid load bearing structure, for example from plastics, glass fibre reinforced plastics, wood or metal or from plastics reinforced by a metal insert. In this case, the seat may have a padded cover and it may be contoured to fit the child's body snugly.

The restraint device may also include means for guiding the shoulder belt of the safety belt system across the chest of the child. For example, such means may comprise a strap attached to the support or to the seat, which strap is engageable round the shoulder belt to locate the shoulder belt in a particular orientation in relation to the support or seat.

The invention will be described further, by way of example, with reference to the accompanying drawings, in which:
Figure 1 is a perspective view of a restraint device according to the present invention;
Figure 2 is a perspective view of the restraint device shown in Figure 1 in use and orienting a safety belt system of a vehicle in relation to the body of a child; and
Figure 3 is a perspective view of a modification of the restraint device of Figure 1 in use.

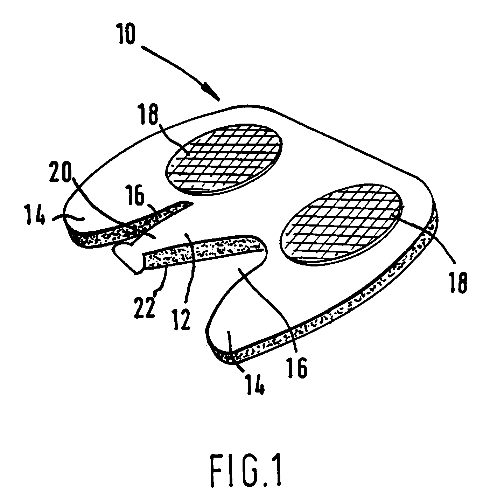

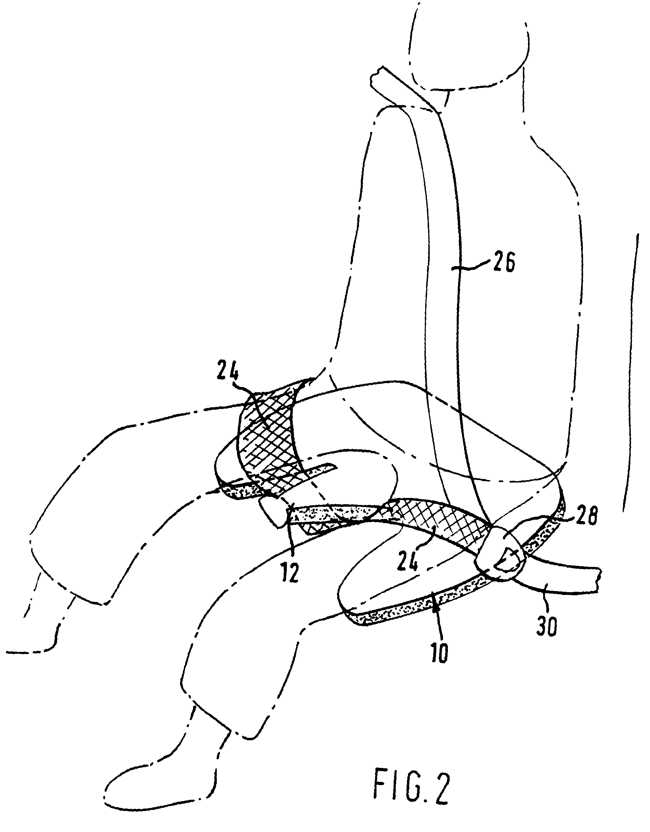

Referring initially to Figures 1 and 2, these show a restraint device comprising an integrally moulded seat 10 formed from glass fibre reinforced plastics by means of injection moulding, blow moulding, rotational moulding, or other moulding process. The seat 10 is formed with a central forwardly projecting hook member 12 and a pair of forwardly extending leg rests 14. Two rearwardly extending slots 16 separate the hook member 12 from the leg rests 14. The seat 10 has a padded covering providing a pair of seat pads 18.

The overall seat 10 including the leg rests 14 is contoured and slightly centrally dipped in order to fit snugly around the bottom of a child and, with the aid of the pair of seat pads 18, provide a firm but comfortable support. The undersurface of the seat 10 includes means, for example a roughened surface, for providing a frictional engagement with the seat of a vehicle in use in order to ensure that the seat 10 does not slip about.

The hook member 12 itself has an upper surface 20 which is inclined upwardly, in relation to the rest of the seat 10 and the leg rests 14, towards the free end of the hook member 12, again for snug location of the child's body. An undersurface 22 of the hook member is also inclined upwardly in relation to the rest of the seat 10 towards the free end of the hook member 12 and then, at the free end, curves slightly downwardly to provide a guide surface for firm positive engagement with a lap belt of a safety belt system as shown in Figure 2. In addition, the free end of the hook member 12 splays out sideways and is enlarged in order to prevent inadvertent or accidental disengagement of the lap belt in use.

Figure 2 shows the restraint device in use in combination with a safety belt system including a lap belt 24 and a shoulder belt 26. As illustrated, the child's buttocks engage firmly with the seat 10 with the child's thighs resting on the leg rests 14. The lap belt 24 engages over the legs of the child and down between the child's legs and is hooked under the hook member 12 to locate the lap belt 24 firmly around the lower body portion of the child and prevent it from riding up in use. A buckle 28 secures the belts 24, 26 to a clasp (not shown) on a fixed strap 30 in the usual way.

The advantage of the present restraint device is that it locates the lap belt 24 of the safety belt system securely and firmly in use against the legs of the child to provide a safe body restraint for the child. The hook 12 is designed to inhibit or prevent disengagement of the lap belt 24 when the safety belt system is secured. At the same time, however, disengagement of the safety belts 24, 26 on release of the buckle 28 is a simple matter and merely requires that the belts be drawn forwardly of the hook member 12.

It is to be noted that the seat 10 is not designed as a booster seat for raising the body of the child but serves primarily as a locating device for the lap belt 24 of the safety belt system. Consequently, the seat 10 is not required to have a substantial thickness but is merely required to be sufficiently rigid to provide adequate load bearing properties, and it can be relatively thin so that the head of the child remains below the level of and protected by the back of the vehicle seat. However, in the case of younger children and infants, it may be advantageous for the seat 10 to be thicker to raise the child up to see out of the vehicle without raising the child so far that its head becomes unprotected.

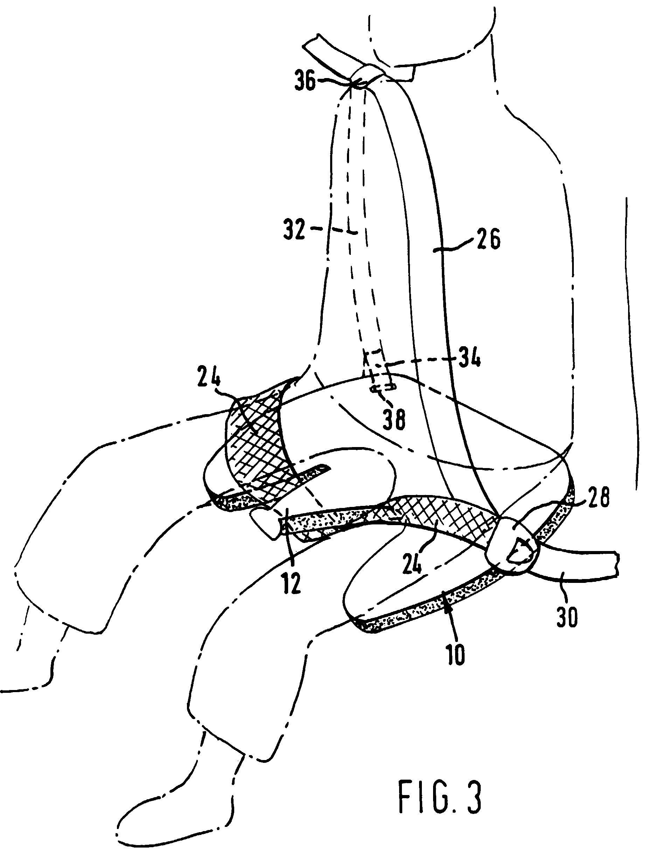

Figure 3 shows a modification of the design illustrated in Figures 1 and 2, in which further means are provided for guiding the orientation of the shoulder belt 26 of the safety belt system. These means comprise a strap 32 fixed at one end 34 to the seat 10 and engageable at the other end 36 with the shoulder belt 26 to locate the shoulder belt 26 at a predetermined level relative to the seat 10.

More particularly, the end 34 of the strap 32 fits through a slot 38 in the seat 10 and is stitched back on itself or fixed by a buckle for attaching the strap 32 to the seat 10. The end 36 is provided with a velcro or alternative fastening by which the end 36 can be engaged with the shoulder belt 26, for example by folding the end 36 over the shoulder belt 26 and fastening it back on itself. The length of the strap 32 is selected so that, when the end 36 is fastened round the shoulder belt 26, the belt 26 is fitted closely to the shoulder of the child to provide a firm restraint.

In the described embodiment, the buckle of the safety belt system is kept in use away from the hook by the body of the child so that no additional load is applied to the hook(s) beyond the weight of the child and the load from the lap belt 24.

Various other modifications are possible within the scope of the present invention.

In particular, the seat 10 may be formed from plastics, wood or metal instead of from glass fibre reinforced plastics. Alternatively, the seat may be formed from plastics reinforced by a metal insert or from a combination of these materials.

Further, in the design shown in Figures 1 to 3, the leg rests 14 may be omitted.

## Claims

1. A restraint device for use with a safety belt system in a vehicle for adapting the orientation of the safety belt to suit a child, comprising a child's seat (10) engageable by the body of the child, and locating means (12) arranged so as to engage the lap belt of the safety belt system to hold the lap belt firmly down against the pelvic region or the thighs of the child in use, characterised in that the seat (10) has a central forwardly projecting hook member (12) extending from the front of the seat and providing the locating means (12).

2. A restraint device according to claim 1 characterised in that the hook member is enlarged at its tip.

3. A restraint device according to claim 1 or 2 characterised in that the hook member is inclined upwardly towards its tip and dips downwardly its tip.

4. A restraint device according to any of claims 1 to 3 characterised in that the hook member is defined by reawardly extending slots (16) on each side of the hook member.

5. A restraint device according to any preceding claim characterised in that the seat is contoured to fit the child's bottom snugly.

6. A restraint device according to any preceding claim characterised in that the undersurface of the seat has means for frictionally engaging the surface of a vehicle seat in order to prevent slippage.

7. A restraint device according to any preceding claim, further characterised by a strap (32) attached to the seat and arranged to be engageable with the shoulder belt of the safety belt system to guide the shoulder belt across the chest and away from the neck of the child.

8. A restraint device according to claim 7, characterised in that the strap includes a fastening arrangement (36) for engaging the strap with the shoulder belt.

## Patentansprüche

1. Rückhaltevorrichtung zur Verwendung mit einem Sicherheitsgurtsystem in einem Fahrzeug, um die Ausrichtung des Sicherheitsgurtes so anzupassen, daß er für ein Kind geeignet ist, mit
einer Kindersitzunterlage (10) zur Aufnahme des Körpers des Kindes, und
Fixiermitteln (12) zur Aufnahme des Beckengurtes des Sicherheitsgurtsystems, um den Beckengurt bei Benutzung fest nach unten gegen den Beckenbereich oder die Oberschenkel des Kindes zu halten,
**dadurch gekennzeichnet**,
daß die Sitzunterlage (10) ein in der Mitte nach vorne hervortretendes Hakenelement (12) aufweist, das sich von der Vorseite der Sitzunterlage erstreckt und das Fixiermittel (12) darstellt.

2. Rückhaltevorrichtung nach Anspruch 1,
**dadurch gekennzeichnet,**
daß das Hakenelement an seinem Ende erweitert ist.

3. Rückhaltevorrichtung nach Anspruch 1 oder 2,
**dadurch gekennzeichnet**,
daß das Hakenelement in Richtung seines Endes nach oben geneigt ist und das Ende nach unten gekrümmt ist.

4. Rückhaltevorrichtung nach Anspruch 1 bis 3,
**dadurch gekennzeichnet**,
daß das Hakenelement durch sich nach hinten erstreckende Schlitze (16), die sich auf jeder Seite des Hakenelements befinden, definiert ist.

5. Rückhaltevorrichtung nach einem der vorhergehenden Ansprüche,
**dadurch gekennzeichnet**,
daß die Sitzunterlage so geformt ist, daß sie dem Gesäß des Kindes genau angepaßt ist.

6. Rückhaltevorrichtung nach einem der vorhergehenden Ansprüche,
**dadurch gekennzeichnet**,
daß die Unterseite der Sitzunterlage Mittel für eine kraftschlüssige Verbindung der Sitzunterlage mit dem Fahrzeugsitz aufweist, um ein Verrutschen zu verhindern.

7. Rückhaltevorrichtung nach einem der vorhergehenden Ansprüche, weiter
**gekennzeichnet durch**
einen Gurt (32), der an der Sitzunterlage befestigt ist und so angeordnet ist, daß er mit dem Schultergurt des Sicherheitsgurtsystems verbunden werden kann, so daß der Schultergurt über die Brust des Kindes und weg vom Hals des Kindes geführt wird.

8. Rückhaltevorrichtung nach Anspruch 7,
**dadurch gekennzeichnet**,
daß der Gurt eine Verschließvorrichtung (36) aufweist, um den Gurt mit dem Schultergurt zu verbinden.

## Revendications

1. Dispositif de retenue destiné à être utilisé avec un système de ceinture de sécurité dans un véhicule pour adapter l'orientation de la ceinture de sécurité de façon qu'elle convienne à un enfant, ledit dispositif comprenant un siège pour enfant (10) avec lequel le corps de l'enfant vient en contact, et des moyens de positionnement (12) disposés de façon à venir en prise avec le brin ventral du système de ceinture de sécurité pour maintenir, en cours d'utilisation, le brin ventral fermement vers le bas contre la région pelvienne ou les hanches de l'enfant, caractérisé en ce que le siège (10) a un élément formant crochet (12) central se projetant vers l'avant, s'étendant depuis l'avant du siège et fournissant les moyens de positionnement (12).

2. Dispositif de retenue selon la revendication 1, caractérisé en ce que l'élément formant crochet est agrandi au niveau de sa pointe.

3. Dispositif de retenue selon la revendication 1 ou 2, caractérisé en ce que l'élément formant crochet est incliné vers le haut en direction de sa pointe et plonge vers le bas au niveau de sa pointe.

4. Dispositif de retenue selon l'une quelconque des revendications 1 à 3, caractérisé en ce que l'élément formant crochet est défini par des fentes (16) s'étendant vers l'arrière de chaque côté de l'élément formant crochet

5. Dispositif de retenue selon l'une quelconque des revendications précédentes, caractérisé en que le siège est profilé pour s'adapter étroitement au fessier de l'enfant.

6. Dispositif de retenue selon l'une quelconque des revendications précédentes, caractérisé en ce que la surface inférieure du siège comporte des moyens antidérapants pour venir en contact avec la surface d'un siège de véhicule aux fins d'éviter un glissement.

7. Dispositif de retenue selon l'une quelconque des revendications précédentes, caractérisé en outre par une courroie (32) fixée au siège et disposée de façon à pouvoir venir en prise avec le brin d'épaule du système de ceinture de sécurité pour guider le brin d'épaule d'un côté à l'autre de la poitrine de l'enfant et à l'écart de son cou.

8. Dispositif de retenue selon la revendication 7, caractérisé en ce que la courroie comprend un système d'attache (36) pour mettre en prise la courroie avec le brin d'épaule.
